# EUROPÄISCHE PATENTSCHRIFT

(11) **EP 2 101 145 B1**
(45) Veröffentlichungstag und Bekanntmachung des Hinweises auf die Patenterteilung: **24.11.2010**
(21) Anmeldenummer: 08004339.1
(22) Anmeldetag: 10.03.2008
(51) Int. Cl.: G01B 21/14, B29C 47/00

(54) **Mess-Gerät und Verfahren zur Erfassung des Verschleiss-Zustandes von Bohrungen von Schnecken-Extrudern**
Measuring device and method for measuring the level of erosion of drill holes for extruder screws
Appareil de mesure et procédé de détection de l'état d'usure de forages d'extrudeuses à vis sans fin

(43) Veröffentlichungstag der Anmeldung: 16.09.2009
(73) Patentinhaber: Coperion GmbH, 70469 Stuttgart (DE)
(72) Erfinder: Martin, Felix, 70192 Stuttgart (DE); Munz, Rainer, Dipl.-Ing., 71540 Murrhardt (DE); Welb, Sören, 74360 Ilsfeld (DE)
(74) Vertreter: Rau, Manfred

(56) Entgegenhaltungen:
- EP-A- 1 840 505
- WO-A-95/32394
- JP-A- 2004 098 444
- JP-A- 2006 029 865
- US-A- 5 370 006

## Beschreibung

Die Erfindung betrifft ein Mess-Gerät zur Erfassung des Verschleiß-Zustandes der Bohrungs-Wände von zwei einander durchdringenden Gehäuse-Bohrungen von mindestens zweiwelligen Schnecken-Extrudern und ein Verfahren zum Erfassen des Verschleiß-Zustandes.

Aus der EP 1 840 505 ist ein Mess-Gerät der allgemeinen Gattung bekannt, das einen Wagen mit hinteren Antriebs-Rädern aufweist, die an längenveränderbaren Antriebs-Achsen angeordnet sind. Weiterhin sind vordere Führungs-Räder vorgesehen, die an längenveränderbaren Vorder-Achsen gelagert sind. Darüber hinaus sind berührungslos arbeitende Entfernungsmesser vorgesehen, die jeweils um eine Bohrungs-Achse schwenk-antreibbar sind. Sie sind im Abstand zur jeweiligen Bohrungs-Wand lokalisierbar.

Ein grundsätzliches Problem solcher Mess-Geräte besteht darin, vor dem Erfassen des Verschleiß-Zustandes der Gehäuse-Bohrungen das jeweilige Mess-Gerät so auszurichten, dass eine eindeutige Bezugslage der Entfernungsmesser erreicht wird.

Der Erfindung liegt daher die Aufgabe zugrunde, ein Mess-Gerät zu schaffen, das in den beiden Gehäuse-Bohrungen vor dem Erfassen des Verschleiß-Zustandes der Gehäuse-Bohrungen exakt ausrichtbar ist, und ein Verfahren hierzu anzugeben.

Diese Aufgabe wird erfindungsgemäß durch die Merkmale des Anspruches 1 gelöst. Ein erfindungsgemäßes Verfahren ist im Anspruch 8 angegeben. Der Kern der Erfindung besteht darin, dass das Ausrichten der beiden Achsen, um die die Entfernungsmesser schwenkbar sind, in der Weise erfolgt, dass diese Achsen mit den beiden Bohrungs-Achsen des Gehäuses des Schnecken-Extruders fluchten. Dies geschieht in mehreren Schritten, wobei zuerst ein Ausrichten in x-Richtung und anschließend ein Ausrichten in y-Richtung erfolgt. Da jede Achse durch zwei in z-Richtung voneinander beabstandete Zentrier-Einheiten sowohl in der x-Richtung als auch in der y-Richtung ausgerichtet wird, werden die erwähnten Achsen des Mess-Geräts mit den Bohrungs-Achsen des Extruder-Gehäuses in eine fluchtende Lage gebracht. Die Gefahr, dass sich die Achsen nur schneiden, wird damit ausgeschlossen.

Vorteilhafte Ausgestaltungen ergeben sich aus den abhängigen Ansprüchen.

Weitere Vorteile, Merkmale und Einzelheiten der Erfindung ergeben sich aus der Beschreibung eines Ausführungsbeispiels anhand der Zeichnung. Es zeigt
- Fig. 1: einen vertikalen Längsschnitt durch einen Schnecken- Extruder in schematischer Darstellung,
- Fig. 2: eine Draufsicht auf ein Mess-Gerät nach der Erfindung,
- Fig. 3: eine Seiten-Längs-Ansicht des Mess-Geräts nach Fig. 2,
- Fig. 4: eine Stirnansicht des Mess-Geräts in den Gehäuse-Bohrungen des Extruders und
- Fig. 5: einen Querschnitt durch das Mess-Gerät.

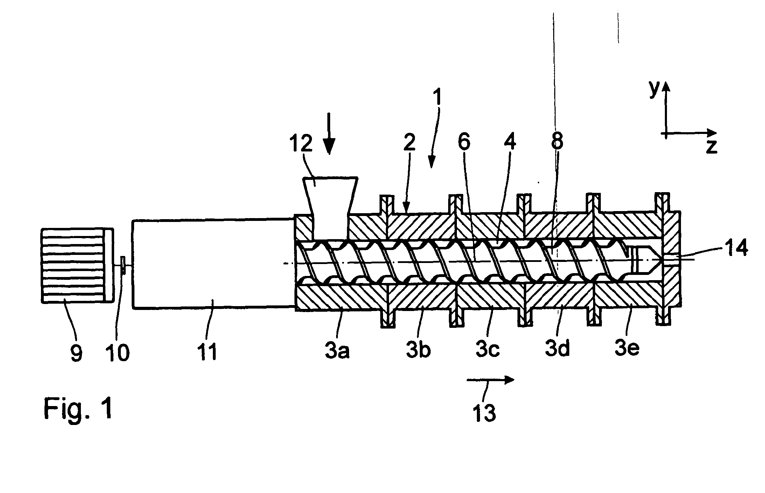

Bei der in Fig. 1 dargestellten Schnecken-Maschine handelt es sich um einen Extruder 1. Der Extruder 1 weist ein Gehäuse 2 auf, das in der üblichen Weise aus mehreren Teil-Gehäusen 3a, 3b, 3c, 3d, 3e gebildet ist, die in der üblichen Weise aneinander geschraubt werden. Das Gehäuse 2 weist zwei 8-förmig ineinander greifende Gehäuse-Bohrungen 4, 5 mit zueinander parallelen Bohrungs-Achsen 6, 7 auf, die einen Abstand a voneinander haben. In jeder Bohrung 4, 5 des Gehäuses 2 ist eine Schnecke 8 angeordnet, die in der übliche Weise aufgebaut sind. Sie werden von einem gemeinsamen Motor 9 angetrieben, der über eine Kupplung 10 an ein Verteilergetriebe 11 angekoppelt ist. Die Schnecken 8 sind wiederum an das Verteiler-Getriebe 11 angeschlossen.

In das erste Teil-Gehäuse 3a, bei dem es sich um das sogenannte Einlauf-Gehäuse handelt, mündet ein Zuführ-Trichter 12 ein, durch den das in dem Extruder 1 aufzubereitende oder zu bearbeitende Material zugeführt wird. Das Material wird mittels der Schnecken 8 unter entsprechender Energiezufuhr in einer Förderrichtung 13 durch das Gehäuse 2 zu einem Auslass 14 befördert, der abnehmbar am Gehäuse 2 angebracht ist. Von dieser Seite können die Schnecken 8 aus dem Gehäuse 2 herausgezogen werden, wenn die Schnecken 8 einerseits und der Zustand der Bohrungen 4, 5 des Gehäuses 2 gereinigt und überprüft werden sollen. Das Ziehen der Schnecken 8 kann in einer Weise erfolgen, wie es beispielsweise in der EP 1 631 434 A (entsprechend US 7,264,460 B2) bzw. der EP 1 481 785 A1 (entsprechend US 2007/0104814 A) bekannt ist.

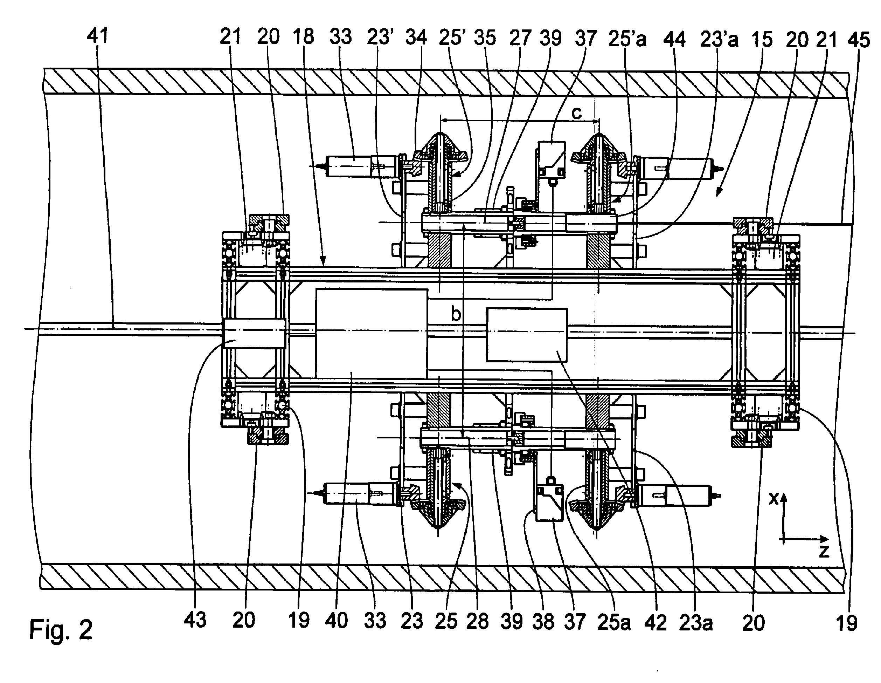

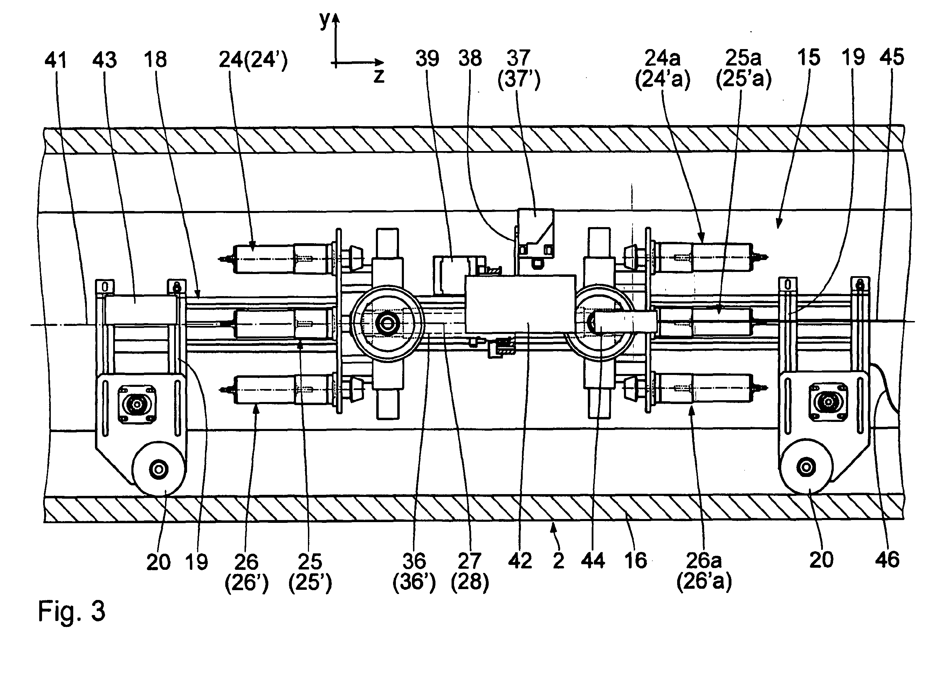

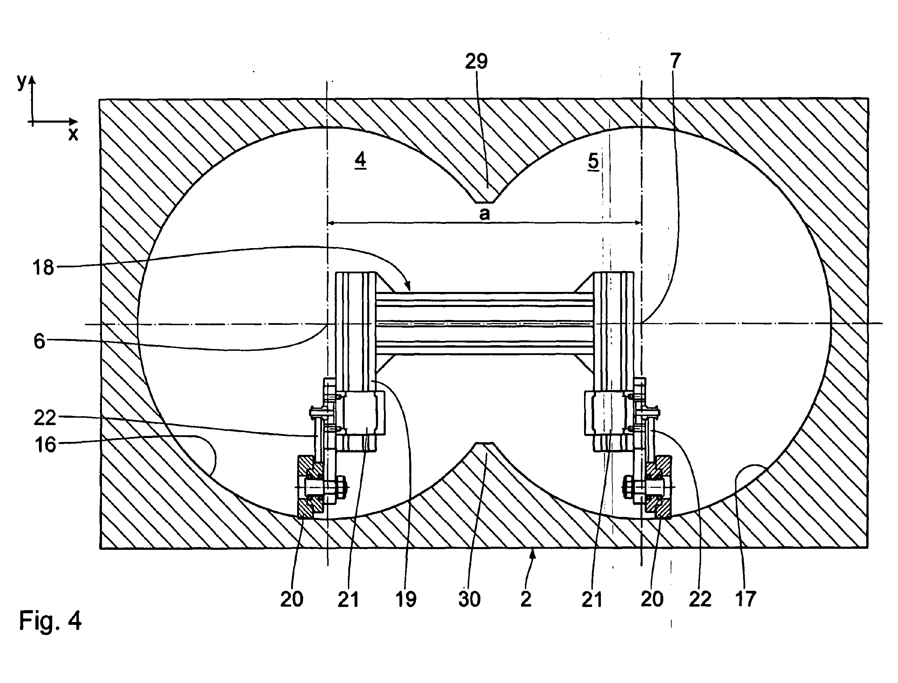

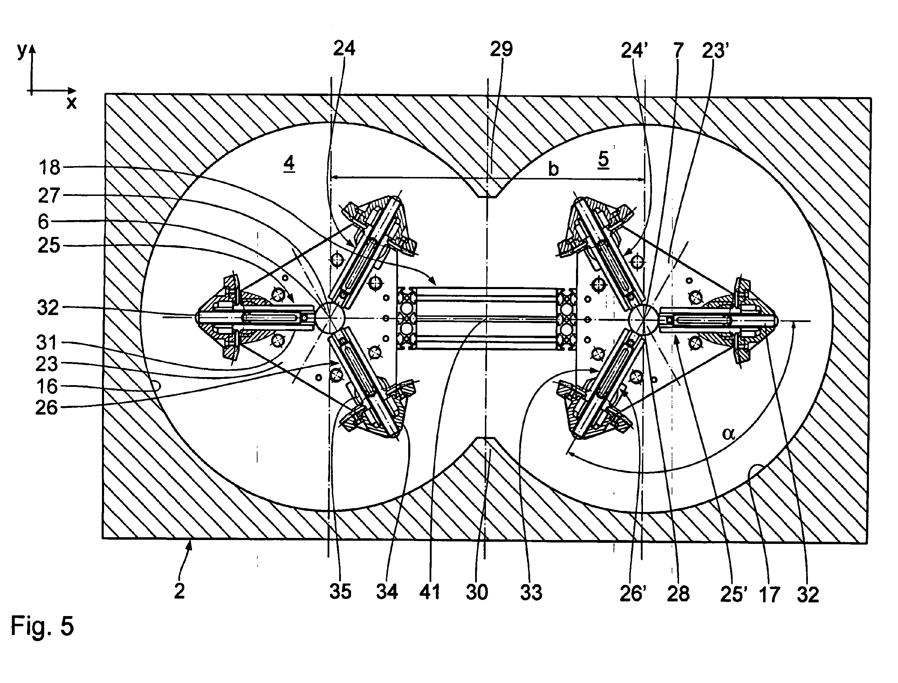

Ein Mess-Gerät 15 zur Erfassung des Verschleiß-Zustandes der Bohrungs-Wände 16, 17 der Bohrungen 4, 5 ist in den Fig. 2 bis 5 dargestellt. Das Mess-Gerät 15 weist einen Wagen mit einem Haupt-Rahmen 18 auf, der an seinen beiden Längs-Enden jeweils zwei Stützen 19 aufweist, die an ihrem unteren Ende ein Rad 20 tragen, das von einem Elektro-Motor 21 antreibbar ist. Die Antriebsübertragung vom jeweiligen Motor 21 auf das jeweilige Rad 20 erfolgt über einen Zahnriemen-Trieb 22. Wie Fig. 4 entnehmbar ist, ist der seitliche Abstand der beiden Räder 20 am vorderen Ende bzw. der beiden Räder 20 am hinteren Ende des Geräts 15 etwas größer als der Abstand a der Achsen 6, 7 voneinander.

Am Haupt-Rahmen 18 sind quer zur Längsrichtung des Haupt-Rahmens 18 seitlich vorspringend Trag-Platten 23, 23a bzw. 23', 23'a angebracht. An jeder Tragplatte 23, 23a bzw. 23', 23'a sind Zentrier-Einheiten 24, 25, 26, 24a, 25a, 26a bzw. 24', 25', 26', 24'a, 25'a, 26'a befestigt, die mit einem Winkelabstand α von 120° zueinander angeordnet sind. Die an jeder TragPlatte 23, 23a bzw. 23', 23'a befestigten drei Zentrier-Einheiten 24, 25, 26, 24a, 25a, 26a bzw. 24', 25', 26', 24'a, 25'a, 26'a sind um eine gemeinsame Achse 27 bzw. 28 angeordnet, wobei der Abstand b der Achsen 27, 28 voneinander identisch dem Abstand a der Bohrungs-Achsen 6, 7 ist. Die der Achse 27 zugeordneten Zentrier-Einheiten 24, 25, 26 bzw. 24a, 25a, 26a bzw. die der Achse 28 zugeordneten Zentrier-Einheiten 24', 25', 26' bzw. 24'a, 25'a, 26'a weisen einen Abstand c in Richtung der Achsen 27, 28 voneinander auf. Die quer zueinander angeordneten Zentrier-Einheiten 24, 25, 26 und 24', 25', 26' bzw. 24a, 25a, 26a und 24'a, 25'a, 26'a liegen jeweils in einer quer zu den Achsen 27, 28 verlaufenden Ebene. Die mittleren Zentrier-Einheiten 25, 25', 25a, 25'a liegen exakt in der durch die Achsen 27, 28 aufgespannten Ebene und ragen gegenüber der jeweiligen Achse 27 bzw. 28 radial nach außen. Die oberen Zentrier-Einheiten 24, 24', 24a, 24'a und die untere Zentrier-Einheit 26, 26', 26a, 26'a ragen - wenn das Mess-Gerät 15 in die Bohrungen 4, 5 eines Gehäuses 2 eingesetzt ist - schräg in Richtung auf den oberen Zwickel 29 bzw. den unteren Zwickel 30 an der Durchdringungsstelle der Bohrungen 4, 5. Die Zentrier-Einheiten 24, 24', 24a, 24'a und 26, 26', 26a, 26'a sind ebenfalls radial zur jeweiligen Achse 27 bzw. 28 angeordnet.

Alle Zentrier-Einheiten 24, 24', 24a, 24'a und 26, 26', 26a, 26'a weisen ein Führungs-Rohr 31 auf, in dem ein Zentrier-Bolzen 32 geführt ist. Letzterer ist von einem elektromotorischen Zentrier-Antrieb 33 über einen Zahn-Kegel-Trieb 34 und einem Spindel-Mutter-Trieb 35 jeweils radial zur Achse 27 bzw. 28 verstellbar.

Auf jedem die Zentrier-Einheiten 24, 25, 26, 24', 25', 26' einerseits und 24a, 25a, 26a, 24'a, 25'a, 26'a andererseits auf jeder Seite des Mess-Geräts 15 verbindenden Rohr 36, 36', das jeweils konzentrisch zur Achse 27 bzw. zur Achse 28 angeordnet ist, ist ein Laser-Entfernungsmesser 37, 37' um die Achse 27 bzw. die Achse 28 schwenkbar angebracht. Er ist hierzu an einem Schwenk-Arm 38 angebracht, der auf dem jeweiligen Rohr 36 drehbar gelagert ist und mittels eines elektromotorischen Schwenk-Antriebs 39 verschwenkbar ist.

Auf dem Haupt-Rahmen 18 ist eine zentrale Steuerung 40 angeordnet. Des Weiteren ist auf der Mittel-Längs-Achse 41 des Mess-Geräts 15, die mittig zwischen den Achsen 27, 28 und parallel zu diesen verläuft, ein elektronisches Pendel 42 angeordnet, mit dem die Lage des Mess-Geräts 15 erfasst wird. Dies bedeutet, dass mit diesem elektronischen Pendel 42 erfasst wird, ob die Achsen 27, 28 sich in einer gemeinsamen horizontalen Ebene oder in einer quer zur Mittel-Längs-Achse 41 geneigten Ebene befinden. Des Weiteren ist an einem - in Fig. 2 linken - vorderen Ende des Mess-Geräts 15 auf dem Haupt-Rahmen 18 eine Kamera 43 angeordnet. Weiter ist an den Zentrier-Einheiten 24, 25, 26, 24', 25', 26' ein Laser 44 zur visuellen Kontrolle der Lage des Mess-Geräts 15 angebracht, der einen zur Achse 27 parallelen und mit dieser exakt fluchtenden Laserstrahl aussenden kann.

Die Arbeitsweise ist wie folgt:
Das Mess-Gerät 15 wird an eine Stelle in den Bohrungen 4, 5 des Gehäuses 2 des Extruders 1 verfahren, deren Verschleißzustand gemessen werden soll. Diese Stelle kann dadurch aufgefunden werden, dass die Bohrungs-Wände 16, 17 mittels der Kamera 43 betrachtet werden, die als Weitwinkel-Kamera ausgebildet ist. Anschließend wird mittels beider Laser-Entfernungsmesser 37, 37' deren Abstand von der jeweiligen Bohrungs-Wand 16 bzw. 17 und damit der Abstand jeder Achse 27, 28 von der Bohrungs-Wand 16 bzw. 17 gemessen. Damit ist die Lage der beiden Achsen 27, 28 relativ zu den Achsen 6, 7 der Bohrungen 4, 5 erfasst.

Der erste Korrekturschritt besteht darin, dass die mittleren Zentrier-Einheiten 25, 25' oder 25a, 25'a ausgefahren werden, und zwar dort, wo sich die Achse 27 oder 28 näher an der Bohrungs-Wand 16 bzw. 17 befindet. Es wird also der Zentrier-Bolzen 32 der mittleren Zentrier-Einheiten 25, 25' bzw. 25a, 25'a gegen die Bohrungs-Wand 16 oder 17 gefahren und so weit herausgeschoben, bis das Mess-Gerät 15 so weit quer zur Richtung der Achsen 6, 7 verschoben ist, bis der Abstand der Achsen 27, 28 von den Bohrungs-Wänden 16, 17 in der horizontalen x-Richtung gleich ist. Hierzu wird während des erwähnten Ausfahrens der Zentrier-Bolzen 32 der beiden mittleren Zentrier-Einheiten 25, 25' bzw. 25a, 25'a ständig der Abstand der Bohrungs-Wände 16, 17 von den Achsen 27, 28 mittels der Entfernungsmesser 37, 37' gemessen und entsprechend über die Steuerung 40 ausgewertet. Da für jede Bohrung 4 bzw. 5 an dem Mess-Gerät in z-Richtung, also in Richtung der Achsen 27, 28, im Abstand voneinander zwei gleichartige Zentrier-Einheiten 25, 25' bzw. 25a, 25'a vorhanden sind, erfolgt auf diese Weise auch ein Ausrichten der Achsen 27, 28 parallel zu den Achsen 6, 7 der Bohrungen 4, 5. Eine Verkantung der Achsen 27, 28 gegenüber den Soll-Achsen 6, 7 kann also nicht erfolgen. Da das erwähnte Ausrichten in horizontaler x-Richtung, also in der durch die beiden Achsen 6, 7 der Bohrungen 4, 5 aufgespannten Ebene, nur von einer Seite her erfolgt, wird das Mess-Gerät 15 nicht zwischen den Bohrungs-Wänden 16, 17 verspannt.

Im Anschluss daran erfolgt eine Ausrichtung des Mess-Geräts in der y-Richtung, also senkrecht zur x-Richtung und zur z-Richtung. Hierzu werden wiederum die Abstände der Achsen 27, 28 von den Bohrungs-Wänden 16, 17 gemessen und die Zentrier-Bolzen 32 der unteren Zentrier-Einheiten 26, 26' und 26a, 26'a soweit ausgefahren, bis sich die Achsen 27, 28 in gleichem Abstand nach oben und unten, also in y-Richtung zur Bohrungs-Wand 16 bzw. 17 befinden. Hierbei werden die Räder 20 von der Bohrungs-Wand 16, 17 abgehoben. Wie bereits erwähnt, ist deren Lage relativ zum Haupt-Rahmen 18 in y-Richtung derart, dass sich beim Verfahren des Mess-Geräts, wenn also die Räder 20 auf den Bohrungs-Wänden 16, 17 aufstehen, die Achsen 27, 28 unterhalb der durch die Achsen 6, 7 der Bohrungen 4, 5 aufgespannten Ebene befinden.

Grundsätzlich ist nun das Ausrichten des Mess-Geräts so vollzogen, dass die Achsen 27, 28 mit den Achsen 6, 7 fluchten. Sollte eine Verkippung des Mess-Geräts 15 festgestellt werden, so gibt das elektronische Pendel 42, falls eines vorhanden ist, ein Signal auf die Steuerung 40, worüber eine entsprechende Kompensation durchgeführt wird.

Die oberen Zentrier-Einheiten 24, 24' und 24a, 24'a sind für den Fall vorgesehen, dass die mittleren Zentrier-Einheiten 25, 25' oder 25a, 25'a oder zumindest eine dieser Zentrier-Einheiten 25, 25', 25a, 25'a nicht eingesetzt werden kann, weil beispielsweise eine seitliche Öffnung in einer Bohrungs-Wand 16 oder 17 ist, durch die beispielsweise eine Zuführschnecke für Füllstoffe oder dergleichen einmündet.

Wenn der Laser 44 auf dem Mess-Gerät 15 vorhanden ist, der einen exakt mit einer Achse 28 fluchtenden Laser-Strahl 45 abgibt, dann kann eine zusätzliche Lagekontrolle dadurch erfolgen, dass an das Ende der zugehörigen Bohrung 5 ein Papier mit einem Fadenkreuz angebracht wird, auf dem die Lage der Soll-Achse 7 abgebildet ist.

Die Stromversorgung erfolgt über ein Schleppkabel 46.

## Patentansprüche

1. Mess-Gerät zur Erfassung des Verschleiß-Zustandes der Bohrungs-Wände (16, 17) von zwei einander durchdringenden Gehäuse-Bohrungen (4, 5) von mindestens zweiwelligen Schnecken-Extrudern,
wobei die Gehäuse-Bohrungen (4, 5) parallel zueinander verlaufende Bohrungs-Achsen (6, 7) mit einem Abstand (a) voneinander aufweisen und
wobei quer zu den Bohrungs-Achsen (6, 7) und in der durch die Bohrungs-Achsen (6, 7) aufgespannten Ebene eine x-Richtung definiert ist und
wobei senkrecht zu den Bohrungs-Achsen (6, 7) und zu der x-Richtung jeweils eine y-Richtung definiert ist und
wobei senkrecht zur x-Richtung und zur y-Richtung in Richtung der jeweiligen Bohrungs-Achse (6, 7) eine z-Richtung definiert ist, wobei das Mess-Gerät einen Wagen aufweist,
- mit vorderen Rädern (20),
- mit hinteren Rädern (20) und
- mit Antriebs-Motoren (21) für mindestens zwei Räder (20),
- mit zwei zueinander parallelen Achsen (27), die einen Abstand (b) aufweisen, der gleich dem Abstand (a) der Bohrungs-Achsen (6, 7) ist
- mit berührungslos arbeitenden Entfernungsmessern (37, 37'), die jeweils um eine der Achsen (27, 28) schwenkantreibbar sind,
- mit Zentrier-Einheiten (24, 25, 26, 24a, 25a, 26a, 24', 25', 26', 24'a, 25'a, 26'a),
-- die jeweils motorisch ausfahrbare, gegen eine Bohrungs-Wand (16, 17) anlegbare Zentrier-Bolzen (32) aufweisen, und
-- von denen jeweils eine mittlere Zentrier-Einheit (25, 25a, 25', 25'a) und eine untere Zentrier-Einheit (26, 26a, 26', 26'a) radial zu einer der Achsen (27, 28) und in z-Richtung beiderseits der Entfernungsmesser (37, 37') angeordnet sind.

2. Mess-Gerät nach Anspruch 1, **dadurch gekennzeichnet,**
**dass** die berührungslos arbeitenden Entfernungsmesser als Laser-Entfernungsmesser (37, 37') ausgebildet sind.

3. Mess-Gerät nach Anspruch 1, **dadurch gekennzeichnet,**
**dass** zugeordnet zu jeder Achse (27, 28) jeweils zwei obere Zentrier-Einheiten (24, 24a, 24', 24'a) vorgesehen sind.

4. Mess-Gerät nach Anspruch 1, **dadurch gekennzeichnet,**
**dass** eine Kamera (43) auf dem Wagen angeordnet ist.

5. Mess-Gerät nach Anspruch 1, **dadurch gekennzeichnet,**
**dass** auf dem Wagen ein Laser (44) vorgesehen ist, der einen mit einer der Achsen (28) fluchtenden Laser-Strahl aussenden kann.

6. Mess-Gerät nach Anspruch 1, **dadurch gekennzeichnet,**
**dass** auf dem Wagen eine zentrale Steuerung (40) angeordnet ist.

7. Mess-Gerät nach Anspruch 1, **dadurch gekennzeichnet,**
**dass** auf dem Wagen ein elektronisches Pendel (42) angeordnet ist.

8. Verfahren zur Erfassung des Verschleiß-Zustandes der Bohrungs-Wände (16, 17) von zwei einander durchdringenden Gehäuse-Bohrungen (4, 5) von mindestens zweiwelligen Schnecken-Extrudern,
wobei die Gehäuse-Bohrungen (4, 5) parallel zueinander verlaufende Bohrungs-Achsen (6, 7) mit einem Abstand (a) voneinander aufweisen und
wobei quer zu den Bohrungs-Achsen (6, 7) und in der durch die Bohrungs-Achsen (6, 7) aufgespannten Ebene eine x-Richtung definiert ist und
wobei senkrecht zu den Bohrungs-Achsen (6, 7) und zu der x-Richtung jeweils eine y-Richtung definiert ist und wobei senkrecht zur x-Richtung und zur y-Richtung in Richtung der jeweiligen Bohrungs-Achse (6, 7) eine z-Richtung definiert ist, wobei das Verfahren mit einem Mess-Gerät nach einem der Ansprüche 1 bis 7 durchgeführt wird und,
wobei folgende Schritte ausgeführt werden:
- Verfahren des Mess-Geräts an eine zu untersuchende Stelle der Gehäuse-Bohrungen (4, 5),
- Messen des ist-Abstandes der Bohrungs-Wände (16, 17) von den Achsen (27, 28) mindestens im Bereich der x-Richtung mittels der Entfernungs-Messer (37, 37'),
- Verschieben des Mess-Geräts mittels der beiden nur einer Achse (27, 28) zugeordneten mittleren Zentrier-Einheiten (25, 25a oder 25', 25'a) in x-Richtung, bis die Achsen (27, 28) gleichen Abstand in x-Richtung zu den Bohrungs-Wänden (16, 17) haben und parallel zu den Bohrungs-Wänden (16, 17) verlaufen,
- Verschieben des Mess-Geräts (15) mittels aller unteren Zentrier-Einheiten (26, 26a, 26', 26'a) in y-Richtung unter Abheben der Räder (20) von den Bohrungs-Wänden (16, 17) bis der Abstand jeder Achse (27, 28) in y-Richtung von der jeweiligen Bohrungs-Wand (16, 17) gleich ist und
- Messen des Abstands der jeweiligen Bohrungs-Wand (16, 17) von der jeweiligen Achse (27, 28) mittels des jeweiligen Entfernungsmessers (37, 37').

9. Verfahren nach Anspruch 8, **dadurch gekennzeichnet,**
**dass** ein Fluchten der Achsen (27, 28) mit den Bohrungs-Achsen (6, 7) mittels des Lasers (44) überprüft wird.

10. Verfahren nach Anspruch 8, **dadurch gekennzeichnet,**
**dass** nach dem Verschieben des Mess-Geräts in x-Richtung und y-Richtung alle mittleren Zentrier-Einheiten (25, 25a, 25', 25'a) an die jeweilige Bohrungs-Wand (16, 17) angelegt werden.

## Claims

1. Measuring device for detecting the state of wear of the bore walls (16, 17) of two interpenetrating housing bores (4, 5) of screw extruders comprising at least two shafts,
wherein the housing bores (4, 5) are provided with parallel bore axes (6, 7) that extend parallel to each other at a distance (a) from each other, and
wherein in a direction transverse to the bore axes (6, 7) and in the plane spanned by the bore axes (6, 7) is defmed an x-direction, and wherein in a direction perpendicular to the bore axes (6, 7) and to the x-direction is defmed in each case one y-direction, and
wherein in a direction perpendicular to the x-direction and to the y-direction in the direction of the respective bore axis (6, 7) is defined a z-direction,
wherein the measuring device is provided with a carriage comprising
- front wheels (20),
- rear wheels (20) and
- drive motors for at least two wheels (20),
- two axes (27) which are parallel to each other and have a distance (b) which is equal to the distance (a) of the bore axes (6, 7),
- distance metres (37, 37') which operate in a contact-free manner and are pivotally drivable about in each case one of the axes (27, 28);
- centring units (24, 25, 26, 24a, 25a, 26a, 24', 25', 26', 24'a, 25'a, 26'a),
-- of which each is provided with motor-extendable centring bolts (32) which are applicable to a bore wall (16, 17), and
-- of which in each case one central centring unit (25, 25a, 25', 25'a) and a lower centring unit (26, 26a, 26', 26'a) are arranged radially to one of the axes (27, 28) and on both sides of the distance metres (37, 37') when seen in the z-direction.

2. Measuring device according to claim 1, **characterised in that** the contact-free operating distance metres are designed as laser distance metres (37, 37').

3. Measuring device according to claim 1, **characterised in that** assigned to each axis (27, 28), there are in each case provided two upper centring units (24, 24a, 24', 24'a).

4. Measuring device according to claim 1, **characterised in that** a camera (43) is arranged on the carriage.

5. Measuring device according to claim 1, **characterised in that** on the carriage is provided a laser (44) which is able to emit a laser beam that is in line with one of the axes (28).

6. Measuring device according to claim 1, **characterised in that** a central control system (40) is arranged on the carriage.

7. Measuring device according to claim 1, **characterised in that** an electronic pendulum (42) is arranged on the carriage.

8. Method for detecting the state of wear of the bore walls (16, 17) of two interpenetrating housing bores (4, 5) of screw extruders comprising at least two shafts,
wherein the housing bores (4, 5) are provided with parallel bore axes (6, 7) that extend parallel to each other at a distance (a) from each other, and
wherein in a direction transverse to the bore axes (6, 7) and in the plane spanned by the bore axes (6, 7) is defined an x-direction, and
wherein in a direction perpendicular to the bore axes (6, 7) and to the x-direction is defined in each case one y-direction, and
wherein in a direction perpendicular to the x-direction and to the y-direction in the direction of the respective bore axis (6, 7) is defined a z-direction,
wherein the method is performed with a measuring device according to one of the claims 1 to 7, and
wherein the following steps are performed:
- moving the measuring device to a position of the housing bores (4, 5) to be examined;
- measuring the actual distance of the bore walls (16, 17) from the axes (27, 28) at least in the region of the x-direction by means of the distance metres (37, 37'),
- moving the measuring device by means of the two central centring units (25, 25a or 25', 25'a), which are assigned to only one axis (27, 28) in the x-direction until the axes (27, 28) have the same distance, seen in the x-direction, to the bore walls (16, 17) and are parallel to the bore walls (16, 17),
- moving the measuring device (15) by means of all lower centring units (26, 26a, 26', 26'a) in the y-direction, causing the wheels (20) to be lifted off the bore walls (16, 17), until the distance of each axis (27, 28) from the respective bore wall (16, 17) is the same in the y-direction, and
- measuring the distance of the respective bore wall (16, 17) from the respective axis (27, 28) by means of the respective distance metre (37, 37').

9. Method according to claim 8, **characterised in that** an alignment of the axes (27, 28) with the bore axes (6, 7) is verified by means of the laser (44).

10. Method according to claim 8, **characterised in that** after moving the measuring device in x-direction and y-direction, all central centring units (25, 25a, 25', 25'a) are applied to the respective bore wall (16, 17).

## Revendications

1. Appareil de mesure pour la détection de l'état d'usure des parois (16, 17) de deux alésages (4, 5) s'interpénétrant mutuellement et ménagés dans le carter d'extrudeuses à vis sans fin à au moins deux arbres,
dans lequel les alésages de carter (4, 5) présentent des axes (6, 7) parallèles entre eux et écartés l'un de l'autre d'une distance (a), et
dans lequel une direction x est définie transversalement aux axes d'alésage (6, 7) et dans le plan formé par les axes d'alésage (6, 7), et
dans lequel est définie respectivement une direction y perpendiculairement aux axes d'alésage (6, 7) et à la direction x, et
dans lequel est définie une direction z perpendiculairement à la direction x et à la direction y dans la direction de l'axe d'alésage (6, 7) respectif, l'appareil de mesure présentant un chariot doté de
- roues avant (20),
- roues arrière (20) et
- moteurs d'entraînement (21) pour au moins deux roues (20),
- deux axes (27) parallèles entre eux, qui présentent un écartement (b) égal à l'écartement (a) des axes d'alésage (6, 7),
- des dispositifs de mesure de distance (37, 37') fonctionnant sans contact, pouvant être entraînés à pivotement respectivement autour de l'un des axes (27, 28),
- des unités de centrage (24, 25, 26, 24a, 25a, 26a, 24', 25', 26', 24'a, 25'a, 26'a),
-- qui présentent chacune des axes de centrage (32) déployables de manière motorisée, pouvant être appliqués contre une paroi d'alésage (16, 17), et
-- dont respectivement une unité de centrage médiane (25, 25a, 25', 25'a) et une unité de centrage inférieure (26, 26a, 26', 26'a) sont disposées radialement par rapport à l'un des axes (27, 28) et dans la direction z des deux côtés du dispositif de mesure de distance (37, 37').

2. Appareil de mesure selon la revendication 1, **caractérisé en ce que** les dispositifs de mesure de distance fonctionnant sans contact sont conçus en tant que dispositifs de mesure de distance à laser (37, 37').

3. Appareil de mesure selon la revendication 1, **caractérisé en ce que** sont prévues, associées à chaque axe (27, 28), respectivement deux unités de centrage supérieures (24, 24a, 24', 24'a).

4. Appareil de mesure selon la revendication 1, **caractérisé en ce qu'**une caméra (43) est disposée sur le chariot.

5. Appareil de mesure selon la revendication 1, **caractérisé en ce qu'**est prévu sur le chariot un laser (44) qui peut émettre un rayon laser en alignement avec l'un des axes (28).

6. Appareil de mesure selon la revendication 1, **caractérisé en ce qu'**une commande centrale (40) est disposée sur le chariot.

7. Appareil de mesure selon la revendication 1, **caractérisé en ce qu'**un pendule électronique (42) est disposé sur le chariot.

8. Procédé de détection de l'état d'usure des parois (16, 17) de deux alésages (4, 5) s'interpénétrant mutuellement et ménagés dans le carter d'extrudeuses à vis sans fin à au moins deux arbres,
dans lequel les alésages de carter (4, 5) présentent des axes (6, 7) parallèles entre eux et écartés l'un de l'autre d'une distance (a), et
dans lequel une direction x est définie transversalement aux axes d'alésage (6, 7) et dans le plan formé par les axes d'alésage (6, 7), et
dans lequel est définie respectivement une direction y perpendiculairement aux axes d'alésage (6, 7) et à la direction x, et
dans lequel est définie une direction z perpendiculairement à la direction x et à la direction y dans la direction de l'axe d'alésage (6, 7) respectif,
le procédé étant réalisé au moyen d'un appareil de mesure selon l'une des revendications 1 à 7, et les étapes suivantes étant exécutées :
- déplacement de l'appareil de mesure jusqu'à un endroit des alésages de carter (4, 5) à examiner,
- mesure de la distance réelle entre les parois d'alésage (16, 17) et les axes (27, 28) au moins dans la région de la direction x au moyen des dispositifs de mesure de distance (37, 37'),
- déplacement de l'appareil de mesure au moyen des deux unités de centrage médianes (25, 25a ou 25', 25'a) associées à un seul axe (27, 28) dans la direction x, jusqu'à ce que les axes (27, 28) soient, dans la direction x, équidistants des parois d'alésage (16, 17) et parallèles aux parois d'alésage (16, 17),
- déplacement de l'appareil de mesure (15) au moyen de toutes les unités de centrage inférieures (26, 26a, 26', 26'a) dans la direction y en soulevant les roues (20) des parois d'alésage (16, 17) jusqu'à ce que chaque axe (27, 28) soit, dans la direction y, équidistant de la paroi d'alésage (16, 17) respective, et
- mesure de la distance de la paroi d'alésage (16, 17) respective par rapport à l'axe (27, 28) respectif au moyen du dispositif de mesure de distance (37, 37') respectif.

9. Procédé selon la revendication 8, **caractérisé en ce qu'**un alignement des axes (27, 28) avec les axes d'alésage (6, 7) est vérifié au moyen du laser (44).

10. Procédé selon la revendication 8, **caractérisé en ce que**, après le déplacement de l'appareil de mesure dans la direction x et dans la direction y, toutes les unités de centrage médianes (25, 25a, 25', 25'a) sont appliquées sur la paroi d'alésage (16, 17) respective.
